(19) Europäisches Patentamt / European Patent Office / Office européen des brevets

(11) **EP 3 521 476 A1**

(12) **EUROPEAN PATENT APPLICATION**
published in accordance with Art. 153(4) EPC

(43) Date of publication:
07.08.2019 Bulletin 2019/32

(51) Int Cl.:
*C22C 38/00* (2006.01)        *B23K 35/30* (2006.01)
*C22C 19/05* (2006.01)        *C22C 38/58* (2006.01)

(21) Application number: 17858410.8

(22) Date of filing: 03.10.2017

(86) International application number:
PCT/JP2017/036022

(87) International publication number:
WO 2018/066573 (12.04.2018 Gazette 2018/15)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 03.10.2016 JP 2016195683

(71) Applicant: Nippon Steel Corporation
Tokyo 100-8071 (JP)

(72) Inventors:
• KURIHARA, Shinnosuke
  Tokyo 100-8071 (JP)
• SEMBA, Hiroyuki
  Tokyo 100-8071 (JP)
• OKADA, Hirokazu
  Tokyo 100-8071 (JP)
• HIGUCHI, Junichi
  Tokyo 100-8071 (JP)
• TANAKA, Katsuki
  Tokyo 100-8071 (JP)
• OSUKI, Takahiro
  Tokyo 100-8071 (JP)

(74) Representative: Zimmermann & Partner
Patentanwälte mbB
Postfach 330 920
80069 München (DE)

(54) **AUSTENITIC HEAT-RESISTANT ALLOY AND WELDING JOINT USING SAME**

(57)    There is provided an austenitic heat resistant alloy including a chemical composition that contains, in mass percent: C: 0.04 to 0.18%, Si: 1.5% or less; Mn: 2.0% or less, P: 0.020% or less, S: 0.030% or less, Cu: 0.10% or less, Ni: 20.0 to 30.0%, Cr: 21.0 to 24.0%, Mo: 1.0 to 2.0%, Nb: 0.10 to 0.40%, Ti: 0.20% or less, Al: 0.05% or less, N: 0.10 to 0.35%, and B: 0.0015 to 0.005%, with the balance: Fe and impurities, the austenitic heat resistant alloy satisfying [P + 6B ≤ 0.040].

EP 3 521 476 A1

**Description**

TECHNICAL FIELD

The present invention relates to an austenitic heat resistant alloy and a welded joint including the austenitic heat resistant alloy.

BACKGROUND ART

In recent years, ultra super critical boilers, in which a temperature and a pressure of steam are increased for high efficiency, are newly being built all over the world. Use conditions of devices under such high-temperature environments have become significantly harsh, and then performance requirements for materials to be used have become rigorous. For example, in a field of thermal power generation boilers, a high creep rupture strength is required because a steam temperature reaches 650°C or more.

In addition, when the materials are used as structure members or the like, welding is indispensable, and thus a high creep rupture strength is also required for weld zones. Hence, austenitic stainless steels have been invented that have improved creep rupture strengths by containing optimal amounts of various alloying elements.

To meet rigorous requirements described above, Patent Document 1 discloses a high-strength austenitic heat resistant stainless steel used for high temperature equipment such as power generation boilers, the high-strength austenitic heat resistant stainless steel being excellent in embrittlement cracking resistance in weld zones in high-temperature use.

LIST OF PRIOR ART DOCUMENTS

PATENT DOCUMENT

Patent Document 1: WO 2009/044796

SUMMARY OF INVENTION

TECHNICAL PROBLEM

In Patent Document 1, contents of P, S, Sn, Sb, Pb, Zn, and As are reduced, and contents of Nb, V, Ti, and N are adjusted to within respective specified ranges, which makes it possible to obtain a high-strength austenitic heat resistant stainless steel that has a low crack susceptibility in welding heat affected zones (HAZ) and is excellent in embrittlement cracking resistance in weld zones.

However, for the technique described in Patent Document 1, detailed studies are conducted about cracking in a HAZ, but no studies are conducted about cracking in a weld metal portion; the technique is susceptible to improvement.

Objectives of the present invention is to solve the above problem and to provide an austenitic heat resistant alloy that has a low crack susceptibility in weld metal portions and is suitable for producing a weld joint excellent in creep rupture strength.

SOLUTION TO PROBLEM

The present invention is made to solve the problems described above, and the gist of the present invention is the following austenitic heat resistant alloy and a welded joint including the austenitic heat resistant alloy.

(1) An austenitic heat resistant alloy including a chemical composition consisting of, in mass percent:

C: 0.04 to 0.18%;
Si: 1.5% or less;
Mn: 2.0% or less;
P: 0.020% or less;
S: 0.030% or less;
Cu: 0.10% or less;
Ni: 20.0 to 30.0%;
Cr: 21.0 to 24.0%;
Mo: 1.0 to 2.0%;

Nb: 0.10 to 0.40%;
Ti: 0.20% or less;
Al: 0.05% or less;
N: 0.10 to 0.35%; and
B: 0.0015 to 0.005%,
with the balance: Fe and impurities, and
the austenitic heat resistant alloy satisfying a following Formula (i):

$$P + 6B \leq 0.040 \quad \text{... (i)}$$

where each symbol of an element in the formula denotes the content of each element (mass%) in the alloy.

(2) The austenitic heat resistant alloy according to the above (1), wherein
the austenitic heat resistant alloy is used for producing a weld joint with a welding material, and
a chemical composition of the welding material consists of, in mass percent:

C: 0.01 to 0.18%;
Si: 1.5% or less;
Mn: 2.0% or less;
P: 0.020% or less;
S: 0.030% or less;
Cu: 0.15% or less;
Cr: 20.0 to 25.0%;
Mo: 10.0% or less;
Nb: 4.0% or less;
Ti: 0.50% or less;
Co: 15.0% or less;
Al: 2.0% or less;
B: 0.005% or less; and
Fe: 30.0% or less,
with the balance: Ni and impurities.

(3) A weld joint of an austenitic heat resistant alloy including
a base metal portion that is made of the austenitic heat resistant alloy according to the above (1), and
a weld metal portion that has a chemical composition consisting of, in mass percent:

C: 0.01 to 0.18%;
Si: 1.5% or less;
Mn: 2.0% or less;
P: 0.020% or less;
S: 0.030% or less;
Cu: 0.15% or less;
Ni: 20.0 to 90.0 %;
Cr: 21.0 to 24.0%;
Mo: 1.0 to 10.0%;
Nb: 0.01 to 4.0%;
Ti: 0.20% or less;
Co: 15.0% or less;
Al: 2.0% or less;
N: 0.01 to 0.35%;
B: 0.005% or less,
with the balance: Fe and impurities, and
satisfying a following Formula (ii):

$$P + 6B \leq 0.030 \quad \text{... (ii)}$$

where each symbol of an element in the formula denotes the content of each element (mass%) in the weld metal portion.

ADVANTAGEOUS EFFECTS OF INVENTION

According to the present invention, it is possible to obtain an austenitic heat resistant alloy that has a low crack susceptibility in a weld metal portion and is suitable for producing a weld joint excellent in creep rupture strength.

DESCRIPTION OF EMBODIMENTS

Requirements of the present invention will be described below in detail.

1. Chemical Composition of Heat Resistant Alloy (Base Metal)

The reasons for limiting contents of elements are as described below. In the following description, the symbol "%" for contents means "percent by mass".

C: 0.04 to 0.18%

C (carbon) is an element that has an effect of stabilizing an austenite phase and contributes to enhancement of a high temperature strength by forming fine intragranular carbides or nitrides together with N. However, an excessively high content of C causes coarse carbides to be generated in high-temperature use, leading to a decrease in creep rupture strength and degrading corrosion resistance. Accordingly, a content of C is set at 0.04 to 0.18%. The content of C is preferably 0.05% or more and is preferably 0.13% or less.

Si: 1.5% or less

Si (silicon) is an element that has a deoxidation action and effective for enhancing corrosion resistance and oxidation resistance at high temperature. However, an excessively high content of Si degrades stability of an austenite phase, leading to decreases in creep rupture strength and toughness. Accordingly, a content of Si is set at 1.5% or less. The content of Si is preferably 1.0% or less, more preferably 0.8% or less.
Note that there is no need to provide a special lower limit to the content of Si, but if the content of Si is extremely reduced, the deoxidation effect becomes insufficient to degrade cleanliness of the steel and leads to an increase in production costs. Accordingly, a content of Si is preferably 0.02% or more.

Mn: 2.0% or less

As with Si, Mn (manganese) has deoxidation action. Mn also contributes to stabilization of an austenite phase. However, an excessively high content of Mn leads to embrittlement and results in decreases in creep ductility and toughness. Accordingly, a content of Mn is set at 2.0% or less. The content of Mn is preferably 1.5% or less.
Note that there is no need to provide a special lower limit to the content of Mn, but if the content of Mn is extremely reduced, the deoxidation effect becomes insufficient to degrade cleanliness of the steel and leads to an increase in production costs. Accordingly, the content of Mn is preferably 0.02% or more.

P: 0.020% or less

S: 0.030% or less

P (phosphorus) and S (sulfur) are elements contained in the alloy as impurities. Both are elements that lower a fusing point of a final solidified portion during solidification of a weld metal, significantly increasing susceptibility to solidification cracking, and cause grain boundary embrittlement in high-temperature use, leading to a decrease in stress relaxation crack resistance. Accordingly, contents of P and S are limited to P: 0.020% or less and S: 0.030% or less.

Cu: 0.10% or less

Cu (copper) is an element that leads to embrittlement when contained excessively. Accordingly, a content of Cu is desirably reduced as much as possible and set at 0.10% or less. The content of Cu is preferably less than 0.05%, more preferably less than 0.01%.

Ni: 20.0 to 30.0%

Ni (nickel) is an element that is effective for obtaining an austenitic structure and an element that is indispensable for ensuring structural stability in long-time use to obtain a desired creep rupture strength. In order to sufficiently obtain the effect within a range of a content of Cr defined in the present invention, Ni needs to be contained at 20.0% or more. On the other hand, Ni is an expensive element, and a content of Ni more than 30.0% leads to an increase in costs. Accordingly, a content of Ni is set at 20.0 to 30.0%. The content of Ni is preferably 22.0% or more and is preferably 28.0% or less.

Cr: 21.0 to 24.0%

Cr (chromium) is an element that is indispensable for ensuring oxidation resistance and corrosion resistance at high temperature. To obtain the effect, Cr needs to be contained at 21.0% or more. However, when a content of Cr becomes as excessive as particularly more than 24.0%, such a content of Cr degrades stability of an austenite phase at high temperature, leading to a decrease in creep rupture strength. Accordingly, the content of Cr is set at 21.0 to 24.0%. The content of Cr is preferably 21.5% or more and is preferably 23.5% or less.

Mo: 1.0 to 2.0%

Mo (molybdenum) is an element that is dissolved in a matrix to contribute to enhancing high temperature strength, especially to enhancing creep rupture strength at high temperature. However, an excessively high content of Mo rather degrades creep rupture strength due to degradation in stability of an austenite phase. In addition, this may increase crack susceptibility in a weld metal portion. Accordingly, a content of Mo is 1.0 to 2.0%. The content of Mo is preferably 1.2% or more and is preferably 1.8% or less.

Nb: 0.10 to 0.40%

Nb (niobium) is an element that finely precipitates in grains in a form of its carbide or nitride to contribute to enhancement of creep rupture strength at high temperature. However, an excessively high content of Nb causes the carbides or nitrides to rapidly coarsen in use at high temperature, leading to extreme degradation in creep rupture strength and toughness. In addition, this may increase crack susceptibility in a weld metal portion. Accordingly, a content of Nb is set at 0.10 to 0.40%. The content of Nb is preferably 0.15% or more and is preferably 0.35% or less.

Ti: 0.20% or less

Ti (titanium) is an element that finely precipitates in grains in a form of its carbide or nitride to contribute to enhancement of creep rupture strength at high temperature; however, an excessively high content of Ti causes the carbides or nitrides to rapidly coarsen in use at high temperature, leading not only to extreme degradation in creep rupture strength and toughness but also significant increase in liquation cracking susceptibility during welding. Accordingly, a content of Ti is set at 0.20% or less.

Al: 0.05% or less

Al (aluminum) has deoxidation action, but addition of Al in a large quantity significantly spoils cleanliness and degrades workability and ductility. Accordingly, a content of Al is set at 0.05% or less. A lower limit of the content of Al is not specially provided, but the content of Al is preferably 0.0005% or more.

N: 0.10 to 0.35%

N (nitrogen) is an austenite stabilizing element and an element that is dissolved in a matrix and forms fine intragranular carbides or nitrides as with C, contributing to ensuring creep rupture strength at high temperature. In addition, N is also an element that is effective for enhancing corrosion resistance. However, an excessively high content of N causes the nitrides to precipitate in a large amount, degrading creep ductility, and in addition, degrades hot workability, causing a surface defect of the base metal. Accordingly, a content of N is set at 0.10 to 0.35%. The content of N is preferably 0.15% or more and is preferably 0.30% or less.

B: 0.0015 to 0.005%

B (boron) segregates in grain boundaries and contributes to grain-boundary strengthening by causing grain boundary carbides to disperse finely. However, an excessively high content of B lowers a fusing point of a final solidified portion during solidification of a weld metal, significantly increasing susceptibility to solidification cracking, and causes grain boundary embrittlement in high-temperature use, leading to a decrease in stress relaxation crack resistance. Accordingly, a content of B is set at 0.0015 to 0.005%. The content of B is preferably 0.002% or more and is preferably 0.0045% or less.

In the chemical composition of the austenitic heat resistant alloy according to the present invention, the balance is Fe and impurities. The term "impurities" used herein means components that are mixed in the alloy in producing the alloy industrially due to raw materials such as ores and scraps, and various factors in the producing process and that are allowed to be mixed in the alloy within ranges in which the impurities have no adverse effect on the present invention.

$$P + 6B \leq 0.040 \quad ... \text{(i)}$$

where each symbol of an element in the formula denotes the content of each element (mass%) in the alloy.

Even when the chemical composition of the alloy satisfies the ranges described above, a crack may occur in a weld metal portion. In particular, a content relationship between P and B satisfying the above Formula (i) enables root pass solidification cracking and reheat cracking to be prevented in the weld metal portion.

2. Chemical Composition of Welding Material

There is no special limitation on the composition of welding material used to weld the base metal, but it is preferable for the composition to have a chemical composition described below.

C: 0.01 to 0.18%

C is an austenite former and an element that is effective for increase stability of an austenitic structure in high-temperature use. In addition, C increases hot cracking resistance during welding. More specifically, C combines mainly with Cr to form its eutectic carbide in a solidification process during welding. This brings disappearance of a liquid phase forward and transforms a metal structure in a final solidified portion into a lamellar metal structure of $(Cr, M)_{23}C_6$ and austenite. As a result, a remnant form of the liquid phase is transformed from a sheet shape to a point shape, stress concentration on a specification surface is prevented, and solidification cracking is prevented. In addition, C increases an interfacial area of a final solidification that is to be a segregation site of impurities, thereby also contributing to prevention of ductility-dip crack during welding and to mitigation of susceptibility to stress relaxation crack in high-temperature use.

To obtain the above effects sufficiently within a range of a content of Cr to be described later, it is necessary to set a content of C at 0.01% or more. However, an excessively high content of C causes surplus C that is not formed into carbides during solidification to finely precipitate in a form of carbides in high-temperature use, which rather increases stress relaxation crack susceptibility. Accordingly, the content of C is set at 0.01 to 0.18%. The content of C is preferably 0.02% or more, more preferably 0.06% or more. The content of C is preferably 0.15% or less.

Si: 1.5% or less

Si is contained as deoxidizer but segregates in columnar crystallite grain boundaries during solidification of a weld metal, so as to lower a fusing point of a liquid phase, which increases solidification cracking susceptibility. Accordingly, it is necessary to set a content of Si at 1.5% or less. Note that there is no need to provide a special lower limit to the content of Si, but if the content of Si is extremely reduced, the deoxidation effect becomes insufficient to degrade cleanliness of the steel and leads to an increase in production costs. Accordingly, a content of Si is preferably 0.02% or more.

Mn: 2.0% or less

As with Si, Mn is contained as deoxidizer. Mn lowers an activity of N in a weld metal, thereby prevent N from scattering from an arc atmosphere, by which Mn also contributes to ensuring strength. However, excessively contained Mn leads to embrittlement, and it is necessary to set a content of Mn at 2.0% or less. The content of Mn is preferably set at 1.5% or less.

Note that there is no need to provide a special lower limit to the content of Mn, but if the content of Mn is extremely reduced, the deoxidation effect becomes insufficient to degrade cleanliness of the steel and leads to an increase in production costs. Accordingly, the content of Mn is preferably 0.02% or more.

P: 0.020% or less

S: 0.030% or less

P and S are contained as impurities and lower a fusing point of a final solidified portion during solidification of a weld metal, significantly increases solidification crack susceptibility. Accordingly, it is necessary to set a content of P at 0.020% or less and set a content of S at 0.030% or less. The content of P is preferably 0.015% or less, and the content of S is preferably 0.020% or less.

Cu: 0.15% or less

Cu is an element that leads to embrittlement when contained excessively. Accordingly, a content of Cu is desirably reduced as much as possible and set at 0.15% or less. The content of Cu is preferably 0.10% or less.

Cr: 20.0 to 25.0%

Cr is an element that is indispensable for ensuring oxidation resistance and corrosion resistance at high temperature. Cr has an action that prevents solidification cracking and ductility-dip crack during welding and an action that mitigates stress relaxation crack susceptibility in high-temperature use, by combining with C in a solidification process to cause C to form its eutectic carbide. To obtain these effects, it is necessary to set a content of Cr at 20.0% or more. However, when a content of Cr becomes as excessive as more than 25.0%, such a content of Cr degrades stability of a structure at high temperature, leading to a decrease in creep rupture strength. For that reason, the content of Cr is set at 20.0 to 25.0%. The content of Cr is preferably 20.5% or more and is preferably 24.5% or less.

Mo: 10.0% or less

Mo is an element that is dissolved in a matrix to contribute to enhancing high temperature strength, especially to enhancing creep rupture strength at high temperature. However, an excessively high content of Mo degrades stability of an austenite phase and increases local corrosion at high temperature. Accordingly, a content of Mo is set at 10.0% or less. The content of Mo is preferably 9.5% or less. A lower limit of the content of Mo need not be defined particularly and may be 0%. However, when the intention is to obtain the above effect, the content of Mo is preferably 0.5% or more, more preferably equal to or more than a content of Mo in the base metal.

Nb: 4.0% or less

Nb is an element that finely precipitates in grains in a form of its carbide or nitride to contribute to enhancement of creep rupture strength at high temperature. However, excessively high content of Nb causes the carbides or nitrides to rapidly coarsen in use at high temperature, leading to extreme degradation in creep rupture strength and toughness. In addition, this may increase crack susceptibility in a weld metal portion. Accordingly, a content of Nb is set at 4.0%. The content of Nb is preferably 3.5% or less. A lower limit of the content of Nb need not be defined particularly and may be 0%. However, when the intention is to obtain the above effect, the content of Nb is preferably 0.1% or more, more preferably 0.5% or more.

Ti: 0.50% or less

Ti is an element that finely precipitates in grains in a form of its carbide or nitride to contribute to enhancement of creep rupture strength at high temperature; however, an excessively high content of Ti causes the carbides or nitrides to rapidly coarsen in use at high temperature, leading not only to extreme degradation in creep rupture strength and toughness but also significant increase in liquation cracking susceptibility during welding. Accordingly, a content of Ti is preferably reduced and set at 0.50%.

Co: 15.0% or less

As with Ni and Cu, Co (cobalt) is an austenite former and increases stability of an austenitic structure, contributing to enhancement of creep rupture strength. However, Co is an extremely expensive element, and excessively containing Co leads to a significant increase in costs. Accordingly, a content of Co is set at 15.0% or less. The content of Co is preferably 14.0% or less. A lower limit of the content of Co need not be defined particularly and may be 0%. However, when the intention is to obtain the above effect, the content of Co is preferably 0.5% or more.

Al: 2.0% or less

Al is an element that has deoxidation action. However, addition of Al in a large quantity significantly spoils cleanliness and degrades workability and ductility. Accordingly, the content of Al is set at 2.0% or less. A lower limit of the content of Al need not be defined particularly and may be 0%. However, when the intention is to obtain the above effect, the content of Al is preferably 0.5% or more.

B: 0.005% or less

B is an element that segregates in grain boundaries in use at high temperature, strengthening the grain boundaries, and causes grain boundary carbides to disperse finely to enhance creep rupture strength. For this reason, B may be contained to obtain this effect. However, excessively containing B increases solidification cracking susceptibility during gas shield arc welding. Accordingly, a content of B is set at 0.005% or less. The content of B is preferably 0.0045% or less. A lower limit of the content of B need not be defined particularly and may be 0%. However, when the intention is to obtain the above effect, the content of B is preferably 0.002% or more.

Fe: 30.0% or less

Fe (iron) is an element that is effective for obtaining an austenitic structure and is indispensable for ensuring structural stability in long-time use to obtain a desired creep rupture strength. However, to secure the content of Ni, a content of Fe is set at 30.0% or less. The content of Fe is preferably 20.0% or less.

In the chemical composition of the welding material, the balance is Ni and impurities. The term "impurities" used herein means components that are mixed in the alloy in producing the alloy industrially due to raw materials such as ores and scraps, and various factors in the producing process and that are allowed to be mixed in the alloy within ranges in which the impurities have no adverse effect on the present invention.

3. Chemical Composition of Weld Metal

A chemical composition of the weld metal made of the base metal and the welding material having the chemical compositions described above is determined depending on flowing ratio between the base metal and the welding material. Accordingly, in a weld joint according to the present invention, a weld metal portion preferably has a chemical composition containing, in mass percent, C: 0.01 to 0.18%, Si: 1.5% or less, Mn: 2.0% or less, P: 0.020% or less, S: 0.030% or less, Cu: 0.15% or less, Ni: 20.0 to 90.0%, Cr: 21.0 to 24.0%, Mo: 1.0 to 10.0%, Nb: 0.01 to 4.0%, Ti: 0.20% or less, Co: 15.0% or less, Al: 2.0% or less, N: 0.01 to 0.35%, and B: 0.005% or less, with the balance: Fe and impurities, and satisfying the following Formula (ii).

Of the above, the content of C is preferably 0.02% or more and is preferably 0.15% or less. The content of Si is preferably 0.02% or more and is preferably 1.0% or less. The content of Mn is preferably 0.02% or more and is preferably 1.5% or less. The content of P is preferably 0.015% or less, and the content of S is preferably 0.020% or less. The content of Cu is preferably less than 0.10%.

The content of Ni is preferably 30.0% or more and is preferably 80.0% or less, more preferably 70.0% or less, and still more preferably 60.0% or less. The content of Cr is preferably 21.2% or more and is preferably 23.5% or less. The content of Mo is preferably 2.0% or more and is preferably 9.5% or less. The content of Nb is preferably 0.10% or more and is preferably 3.5% or less.

The content of Co is preferably 0.5% or more and is preferably 14.0% or less. The content of Al is preferably 0.01% or more and is preferably 1.5% or less. The content of N is preferably 0.02% or more and is preferably 0.15% or less. The content of B is preferably 0.0002% or more and is preferably 0.0045% or less.

$$P + 6B \leq 0.030 \quad ... \text{(ii)}$$

where each symbol of an element in the formula denotes the content of each element (mass%) in the weld metal portion.

In particular, P and B in a weld metal portion satisfying the above Formula (ii) enables root pass solidification cracking and reheat cracking to be prevented in the weld metal portion.

Hereunder, the present invention is more specifically described with reference to Example, but the present invention is not limited to this Example.

EXAMPLE

Alloys having chemical compositions shown in Table 1 were melted and subjected to hot forging, hot rolling and cold rolling, and subjected to solution heat treatment at 1230°C. Thereafter, test specimens for a restraint weld cracking test having a thickness of 15 mm, a width of 120 mm, and a length of 200 mm each subjected to U beveling defined as No. 14349 in JIS Z 3001-1(2013), a root radius r = 0.5 mm, a root face b = 1.2 mm, and a groove angle θ = 40°, were fabricated.

Using each of the test specimens for a restraint weld cracking test obtained in such a manner as described above, restraint-weld was performed on four sides of an SM400C steel plate defined in JIS G 3106(2008) having a thickness of 25 mm, a width of 200 mm, and a length of 300 mm, using ENi6182 defined in JIS Z 3224(2010) as a covered electrode.

[Table 1]

Table 1

| Alloy No. | Chemical composition (in mass%, balance: Fe and impurities) | | | | | | | | | | | | | | |
|---|---|---|---|---|---|---|---|---|---|---|---|---|---|---|---|
| | C | Si | Mn | P | S | Cu | Ni | Cr | Mo | Nb | Ti | Al | N | B | P+6B |
| 1 | 0.077 | 0.39 | 1.02 | 0.013 | 0.001 | <0.01 | 24.92 | 22.35 | 1.49 | 0.25 | 0.01 | 0.02 | 0.192 | 0.0018 | 0.024 |
| 2 | 0.077 | 0.40 | 1.03 | 0.015 | 0.001 | <0.01 | 25.08 | 23.23 | 1.50 | 0.25 | 0.01 | 0.02 | 0.183 | 0.0040 | 0.039 |
| 3 | 0.079 | 0.39 | 1.03 | 0.015 | 0.001 | <0.01 | 27.05 | 22.19 | 1.49 | 0.25 | 0.10 | 0.02 | 0.172 | 0.0025 | 0.030 |
| 4 | 0.079 | 0.40 | 1.03 | 0.016 | 0.001 | <0.01 | 26.96 | 23.27 | 1.49 | 0.25 | 0.10 | 0.02 | 0.169 | 0.0039 | 0.039 |
| 5 | 0.076 | 0.39 | 1.01 | 0.005 | 0.001 | <0.01 | 24.70 | 22.27 | 1.51 | 0.29 | 0.01 | 0.02 | 0.187 | 0.0044 | 0.031 |
| 6 | 0.079 | 0.40 | 1.02 | 0.029 * | 0.001 | <0.01 | 24.80 | 21.99 | 1.49 | 0.26 | 0.01 | 0.02 | 0.178 | 0.0043 | 0.055 * |
| 7 | 0.077 | 0.40 | 1.03 | 0.015 | 0.001 | <0.01 | 25.08 | 22.34 | 1.50 | 0.25 | 0.01 | 0.02 | 0.194 | 0.0044 | 0.041 * |
| 8 | 0.019 * | 0.38 | 0.99 | 0.006 | 0.001 | <0.01 | 24.72 | 22.14 | 1.50 | 0.30 | 0.01 | 0.02 | 0.188 | 0.0047 | 0.034 |
| 9 | 0.076 | 0.39 | 1.00 | 0.017 | 0.001 | <0.01 | 24.58 | 22.17 | 1.49 | 0.29 | 0.01 | 0.02 | 0.202 | 0.0048 | 0.046 * |
| 10 | 0.080 | 0.41 | 1.01 | 0.027 * | 0.001 | <0.01 | 24.84 | 22.26 | 1.51 | 0.30 | 0.01 | 0.02 | 0.194 | 0.0046 | 0.055 * |
| 11 | 0.060 | 0.40 | 1.20 | 0.018 | 0.000 | 0.06 | 19.88 * | 25.07 * | 0.08 * | 0.44 * | 0.01 | 0.02 | 0.251 | 0.0018 | 0.029 |
| * indicates that conditions do not satisfy those defined by the present invention. | | | | | | | | | | | | | | | |

Thereafter, insides of the bevels were subjected to root pass tungsten inert gas welding, using spooled welding materials having a diameter of 1.2 mm and having chemical compositions shown in Table 2. Conditions included a heat input of 9 to 12 kJ/cm and a supply speed of the welding materials of 150 mm/min. Thereafter, about half of the root pass welding portion was left intact, and the balance was subjected to multi-pass weld in a condition including a heat input of 9 to 12 kJ/cm. At this time, an interpass temperature was controlled to 150°C or less. Then, a center portion of the weld metal was subjected to EPMA analysis for quantitative determination, by which a composition of the weld metal was measured. Results of the measurement are shown in Table 3.

[Table 2]

Table 2

| Welding material | Chemical composition (in mass%, balance: Ni and impurities) | | | | | | | | | | | | | |
|---|---|---|---|---|---|---|---|---|---|---|---|---|---|---|
| | C | Si | Mn | P | S | Cu | Cr | Mo | Nb | Ti | Co | Al | B | Fe |
| A | 0.08 | 0.07 | 0.03 | 0.004 | <0.001 | 0.03 | 21.4 | 9.24 | - | 0.30 | 12.08 | 1.18 | <0.0001 | 0.06 |
| B | 0.02 | 0.31 | 0.06 | 0.013 | 0.004 | 0.1 | 21.15 | 8.85 | 3.33 | 0.28 | - | 0.26 | - | 2.81 |

[Table 3]

Table 3

| Test No. | Alloy No. | Welding material | Chemical composition (in mass%, balance: Fe and impurities) | | | | | | | | | | | | | | | |
|---|---|---|---|---|---|---|---|---|---|---|---|---|---|---|---|---|---|---|
| | | | C | Si | Mn | P | S | Cu | Ni | Cr | Mo | Nb | Ti | Co | Al | N | B | P+6B |
| 1 | 1 | A | 0.078 | 0.26 | 0.62 | 0.009 | 0.001 | <0.01 | 37.15 | 21.97 | 4.59 | 0.15 | 0.01 | 4.88 | 0.47 | 0.115 | 0.0011 | 0.016 |
| 2 | 2 | A | 0.078 | 0.27 | 0.63 | 0.011 | 0.001 | <0.01 | 37.25 | 22.50 | 4.60 | 0.15 | 0.01 | 4.81 | 0.44 | 0.110 | 0.0024 | 0.025 |
| 3 | 3 | A | 0.079 | 0.26 | 0.63 | 0.011 | 0.001 | <0.01 | 38.43 | 21.87 | 4.59 | 0.15 | 0.02 | 4.83 | 0.49 | 0.103 | 0.0015 | 0.020 |
| 4 | 4 | A | 0.079 | 0.27 | 0.63 | 0.011 | 0.001 | <0.01 | 38.38 | 22.52 | 4.59 | 0.15 | 0.01 | 4.79 | 0.44 | 0.101 | 0.0023 | 0.025 |
| 5 | 5 | A | 0.078 | 0.26 | 0.62 | 0.005 | 0.001 | <0.01 | 37.02 | 21.92 | 4.60 | 0.17 | 0.01 | 4.85 | 0.51 | 0.112 | 0.0026 | 0.021 |
| 6 | 1 | B | 0.030 | 0.32 | 0.41 | 0.013 | 0.001 | 0.07 | 52.60 | 21.35 | 5.10 | 2.85 | 0.11 | - | 0.21 | 0.058 | 0.0010 | 0.019 |
| 7 | 6 * | A | 0.079 | 0.27 | 0.62 | 0.019 | 0.001 | <0.01 | 37.08 | 21.75 | 4.59 | 0.16 | 0.01 | 4.87 | 0.47 | 0.107 | 0.0026 | 0.035 ** |
| 8 | 7 * | A | 0.078 | 0.27 | 0.63 | 0.012 | 0.001 | <0.01 | 37.25 | 21.96 | 4.60 | 0.21 | 0.01 | 4.81 | 0.48 | 0.162 | 0.0031 | 0.031 ** |
| 9 | 8 * | A | 0.038 | 0.26 | 0.61 | 0.005 | 0.001 | <0.01 | 37.03 | 21.84 | 4.60 | 0.24 | 0.02 | 4.92 | 0.49 | 0.157 | 0.0038 | 0.028 |
| 10 | 9 * | A | 0.078 | 0.26 | 0.61 | 0.012 | 0.001 | <0.01 | 36.95 | 21.86 | 4.59 | 0.23 | 0.01 | 4.78 | 0.50 | 0.162 | 0.0035 | 0.033 ** |
| 11 | 10 * | A | 0.080 | 0.27 | 0.62 | 0.018 | 0.001 | <0.01 | 37.10 | 21.92 | 4.60 | 0.24 | 0.01 | 4.83 | 0.47 | 0.157 | 0.0037 | 0.040 ** |
| 12 | 11 * | A | 0.040 | 0.37 | 0.52 | 0.015 | 0.001 | 0.06 | 41.30 | 22.56 | 5.63 | 0.12 | 0.10 | 6.41 | 0.02 | 0.151 | 0.0013 | 0.023 |

* indicates that conditions do not satisfy those defined by the present invention.
** indicates that conditions fall outside the range of the present invention.

EP 3 521 476 A1

After performing the weld described above, from each of the test pieces, two test specimens for observing a microstructure on a cross section of a joint are taken from a portion where only the root pass weld was performed and a portion where the multi-pass weld was performed. Then, the cross section was subjected to mirror polish and then chromic acid electrolytic etching, and the cross section was observed under an optical microscope at 500x magnification to check for occurrence of a crack. A case where a crack was recognized in the portion where only the root pass weld was performed was determined to be solidification cracking, and a case where a crack was recognized in the portion where the multi-pass weld was performed was determined to be reheat cracking. Then, a case where neither the solidification cracking nor the reheat cracking was recognized in all of the test specimens was determined as "O", and a case where at least one of the solidification cracking and the reheat cracking was recognized was determined as "×".

Next, a stepped round bar creep test specimen was cut from the test specimens such that the weld metal portion was positioned at a center of a parallel portion having a diameter of 6 mm and a length of 10 mm and subjected to a creep rupture test. Then, assuming an actual use environment, a case where a rupture time reached 1000 hours or more in 200 MPa stress loading at 650°C was determined as "O", and a case where the rupture time reached less than 1000 hours was determined as "×".

Results of the determination are shown in Table 4.

[Table 4]

Table 4

| Test No. | Alloy No. | Welding material | Root pass solidification cracking | Reheat cracking | Creep rupture strength of weld joint | |
|---|---|---|---|---|---|---|
| 1 | 1 | A | ○ | ○ | ○ | Inventive example |
| 2 | 2 | A | ○ | ○ | ○ | |
| 3 | 3 | A | ○ | ○ | ○ | |
| 4 | 4 | A | ○ | ○ | ○ | |
| 5 | 5 | A | ○ | ○ | ○ | |
| 6 | 1 | B | ○ | ○ | ○ | |
| 7 | 6 * | A | × | × | ○ | Comparative example |
| 8 | 7 * | A | ○ | × | ○ | |
| 9 | 8 * | A | ○ | ○ | × | |
| 10 | 9 * | A | ○ | × | ○ | |
| 11 | 10 * | A | × | × | ○ | |
| 12 | 11 * | A | ○ | ○ | × | |
| * indicates that conditions do not satisfy those defined by the present invention. | | | | | | |

When the base metals satisfying the definitions of the present invention was used, the results were that neither the solidification cracking nor the reheat cracking occurred in the weld metal portion, and a good creep rupture strength was shown. In contrast, as to Test Nos. 7, 8, 10, and 11, in which values of P + 6B of their base metals were more than 0.040, following which values of P + 6B of their weld metal portions were more than 0.030, the reheat cracking was recognized. As to especially Test Nos. 7 and 11, in which the values of P + 6B of their base metals were more than 0.050, the root pass solidification cracking was recognized. As to Test No. 9 using an alloy No. 8 in which the content of C fell out of the definition, and Test No. 12 using an alloy No. 11 in which the contents of Ni, Cr, Mo, and Nb fell out of the definitions, the results were that creep rupture strengths of their weld joint were poor.

INDUSTRIAL APPLICABILITY

According to the present invention, it is possible to obtain an austenitic heat resistant alloy that has a low crack susceptibility in a weld metal portion and is suitable for producing a weld joint excellent in creep rupture strength.

Therefore, the austenitic heat resistant alloy according to the present invention can be suitably used as a material for equipment such as boilers used under high temperature environments.

**Claims**

1. An austenitic heat resistant alloy comprising a chemical composition consisting of, in mass percent:

   C: 0.04 to 0.18%;
   Si: 1.5% or less;
   Mn: 2.0% or less;
   P: 0.020% or less;
   S: 0.030% or less;
   Cu: 0.10% or less;
   Ni: 20.0 to 30.0%;
   Cr: 21.0 to 24.0%;
   Mo: 1.0 to 2.0%;
   Nb: 0.10 to 0.40%;
   Ti: 0.20% or less;
   Al: 0.05% or less;
   N: 0.10 to 0.35%; and
   B: 0.0015 to 0.005%,
   with the balance: Fe and impurities, and
   the austenitic heat resistant alloy satisfying a following Formula (i):

$$P + 6B \leq 0.040 \quad ... \ (i)$$

   where each symbol of an element in the formula denotes the content of each element (mass%) in the alloy.

2. The austenitic heat resistant alloy according to claim 1, wherein the austenitic heat resistant alloy is used for producing a weld joint with a welding material, and
   a chemical composition of the welding material consists of, in mass percent:

   C: 0.01 to 0.18%;
   Si: 1.5% or less;
   Mn: 2.0% or less;
   P: 0.020% or less;
   S: 0.030% or less;
   Cu: 0.15% or less;
   Cr: 20.0 to 25.0%;
   Mo: 10.0% or less;
   Nb: 4.0% or less;
   Ti: 0.50% or less;
   Co: 15.0% or less;
   Al: 2.0% or less;
   B: 0.005% or less; and
   Fe: 30.0% or less,
   with the balance: Ni and impurities.

3. A weld joint of an austenitic heat resistant alloy comprising
   a base metal portion that is made of the austenitic heat resistant alloy according to claim 1, and
   a weld metal portion that has a chemical composition consisting of, in mass percent:

   C: 0.01 to 0.18%;
   Si: 1.5% or less;
   Mn: 2.0% or less;

P: 0.020% or less;
S: 0.030% or less;
Cu: 0.15% or less;
Ni: 20.0 to 90.0%;
Cr: 21.0 to 24.0%;
Mo: 1.0 to 10.0%;
Nb: 0.01 to 4.0%;
Ti: 0.20% or less;
Co: 15.0% or less;
Al: 2.0% or less;
N: 0.01 to 0.35%;
B: 0.005% or less,
with the balance: Fe and impurities, and
satisfying a following Formula (ii):

$$P + 6B \leq 0.030 \quad \text{... (ii)}$$

where each symbol of an element in the formula denotes the content of each element (mass%) in the weld metal portion.

## INTERNATIONAL SEARCH REPORT

| International application No. |
| --- |
| PCT/JP2017/036022 |

A. CLASSIFICATION OF SUBJECT MATTER
Int.Cl. C22C38/00(2006.01)i, B23K35/30(2006.01)i, C22C19/05(2006.01)i,
C22C38/58(2006.01)i

According to International Patent Classification (IPC) or to both national classification and IPC

B. FIELDS SEARCHED

Minimum documentation searched (classification system followed by classification symbols)
Int.Cl. C22C38/00-38/60, C22C19/05, B23K35/30

| Documentation searched other than minimum documentation to the extent that such documents are included in the fields searched | |
| --- | --- |
| Published examined utility model applications of Japan | 1922-1996 |
| Published unexamined utility model applications of Japan | 1971-2017 |
| Registered utility model specifications of Japan | 1996-2017 |
| Published registered utility model specifications of Japan | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 1-23544 B2 (NIPPON STEEL CORP.) 02 May 1989, & JP 59-173249 A & GB 2138446 A | 1-3 |
| A | JP 2012-1749 A (SANYO SPECIAL STEEL CO., LTD.) 05 January 2012, (Family: none) | 1-3 |
| A | JP 2015-137419 A (NIPPON STEEL & SUMITOMO METAL CORP.) 30 July 2015, (Family: none) | 1-3 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 25 December 2017 (25.12.2017) | 09 January 2018 (09.01.2018) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2017/036022 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2015-202504 A (NIPPON STEEL & SUMITOMO METAL CORP.) 16 November 2015, & CN 104975204 A | 1-3 |
| A | JP 2009-195980 A (SUMITOMO METAL INDUSTRIES, LTD.) 03 September 2009, & US 2010/0136361 A1 & WO 2009/093676 A1 & EP 2243591 A1 & CA 2711748 A1 & KR 10-2010-0113106 A & CN 101925436 A | 1-3 |
| P, A | WO 2017/002523 A1 (NIPPON STEEL & SUMITOMO METAL CORP.) 05 January 2017, (Family: none) | 1-3 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009044796 A